(19) Europäisches Patentamt
European Patent Office
Office européen des brevets

(11) **EP 4 300 143 A1**

(12) **EUROPEAN PATENT APPLICATION**

(43) Date of publication:
**03.01.2024 Bulletin 2024/01**

(21) Application number: **22305929.6**

(22) Date of filing: **27.06.2022**

(51) International Patent Classification (IPC):
**G02B 5/22** *(2006.01)*　　**G02B 1/14** *(2015.01)*

(52) Cooperative Patent Classification (CPC):
**G02B 5/3033; G02B 5/223;** G02B 1/14

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Essilor International**
**94220 Charenton-Le-Pont (FR)**

(72) Inventors:
• **BALASUBRAMANIAN, Srinivasan**
  **WESTFORD, 01886 (US)**
• **FRENCH, Elliot**
  **CHARLTON, 01507 (US)**
• **JALLOULI, Aref**
  **SHREWSBURY, 01545 (US)**

(74) Representative: **Plasseraud IP**
  **66, rue de la Chaussée d'Antin**
  **75440 Paris Cedex 09 (FR)**

(54) **POLARIZED LENS WITH COLOR ENHANCING PROPERTIES**

(57)　The invention relates to a color-enhancing polarizing multilayer film (1) comprising:
- a polarizing layer (12) having a front face and a back face;
- a first protective layer (11);
- a second protective layer (13); and
- one or more isotropic dyes comprised in at least one of the first or second protective layers; wherein the first protective layer is placed on the front face of the polarizing layer and the second protective layer is placed on the back face of the polarizing layer and
wherein the one or more isotropic dyes represent at least 90 wt.%, preferably at least 95 wt.%, still preferably at least 99 wt.%, of the total content of dyes comprised in the first and second protective layers.

**Description**

Technical field

The present invention relates to the technical field of polarized lenses and more particularly to such polarized lenses with color enhancing properties. Such polarizing lenses are suitable for use in sunglasses.

Background art

Polarized lenses with color enhancing properties are known in the art. Various methods can be used to make such lenses. For example, US 9575335 B1 to Oakley Inc. (US) provides color enhancing lenses with an absorbance peak at around 470 nm and another one at around 570 nm. They comprise "chroma enhancement dyes" defined as dyes which produce a discernable and/or substantial chroma-enhancing effect in at least certain types of scenes viewed by a viewer, when in sufficient quantity. Such dyes are used with light polarizing films to filter out polarized light reflected from for example surface of water. The resulting lenses are said to increase color perception, clarity and vividness.

US 6145984 A also describes a color enhancing polarized lenses in which polarized lenses are dyed to have trichroic properties, *i.e.* favoring the transmission of three distinct colors (about 440 nm, 500 nm and 630 nm). The lenses are made from a polarized film sandwiched between a front photochromic lens and a rear lens with trichroic properties. Not much is said about the dyes used. Such lenses are said to provide improvement in color perception and clarity, reduce glare.

Other documents, such as US 2017/0139234 use a combination of a polarizing filters and retarder stacks to achieve color enhancement through spectral transmission tuning. Dyes can be used but only to provide the desired color balance and overall hue of the lens. In particular, such lenses comprise a retarder stack sandwiched between two polarizers. The alignment of the polarizers and the retarder stack is critical to achieve the desired chromatic effect.

US 2298058 A and WO 2016/125694 A1 use two color polarizing filter, either fixed at 90° to each other (the former) or one is rotatable with respect to the other (the latter). In these lenses, dichroic dyes are used. Here dichroism is described as the property of differential absorption of the components of an incident beam of light depending upon the vibration directions of the components. In order to achieve the dichroic properties, the dyes must be oriented. Again, the necessity of the orientation of the dyes on two separate filters makes manufacturing of the lens more difficult because small misalignment would not provide the desired chromatic effect.

Further, although, in some cases the result of the misalignment does not affect the color enhancing properties, it can however decrease the amount of transmitted light. Yet, in some application, and in particular for sunglasses, the decrease in amount of transmitted light can prevent the lens to be suitable for certain activities such as driving. Indeed, a minimum amount of transmitted light is legally defined for sunglasses to be labelled suitable for driving.

Summary of the invention

One aim of the present invention is to overcome at least one drawback of the prior art.

The aim is reached by providing a color-enhancing polarizing multilayer film comprising:

- a polarizing layer having a front face and a back face;
- a first protective layer;
- a second protective layer; and
- one or more isotropic dyes comprised in at least one of the first or second protective layers; wherein the first protective layer is placed on the front face of the polarizing layer and the second protective layer is placed on the back face of the polarizing layer and

wherein the one or more isotropic dyes represent at least 90 wt.%, preferably at least 95 wt.%, still preferably at least 99 wt.%, of the total content of dyes comprised in the first and second protective layers.

The invention achieves effective color enhancing effect by changing two features commonly found in current color enhancing polarized lenses: it uses only one polarizing layer and it uses isotropic dyes rather than dichroic dyes in one or more color enhancing layers.

The use of isotropic dyes in a color enhancing layer applied onto a polarizing film to achieve color enhancing polarized lenses is not known to the present authors. The different layers of such polarized lenses are bonded together through lamination.

Use of dichroic dyes in a color enhancing layer in unoriented manner is in principle possible to avoid the obligation to orientate the layer containing the dyes parallel to the polarizing layers in order to obtain the desired color enhancing effects. However, even when the dichroic dyes of a color enhancing layer are not orientated on purpose, the process used to form the layer, *e.g.* an extrusion process, results in a certain percentage of the dichroic dyes to align in one direction, *e.g.* the extrusion direction. Therefore, when the color enhancing layer and the polarizing layer are laminated together, the angle between the different layers has to be precisely controlled in order to avoid undesirable effects, such as a substantially diminished amount of transmitted light.

The inventors have found that the use of isotropic dyes eliminates the risk of the dyes orienting during formation of the layer, *e.g.* by extrusion, and still provides color-enhancing effect to the lens.

Another aspect of the present invention is related to an ophthalmic lens comprising the multilayer film of the invention and a substrate injection-molded onto the multilayer film.

Another aspect of the present invention is related to a method for producing the multilayer film of the invention, comprising the following steps:

- providing the polarized layer;
- extruding a first mixture comprising a first base material to obtain the first protective layer;
- extruding a second mixture comprising a second base material to obtain the second protective layer; and
- laminating the first protective layer, the polarizing layer and the second protective layer into the multilayer film;

wherein the one or more isotropic dyes are comprised in at least one of the first or second mixtures; and
wherein the one or more isotropic dyes represent at least 90 wt.%, preferably at least 95 wt.%, still preferably at least 99 wt.%, of the total content of dyes comprised in the first and second mixtures.

Another aspect of the present invention is related to a method for producing the ophthalmic lens of the invention from the multilayer film of the invention, comprising injection molding a substrate onto the multilayer film.

## Description of the figures

In Figure 1, the transmission spectra of the arbitrary example of a grey polarizing film and of the colored polarizing film are shown along with the polarization efficiency (PE) of the colored polarizing film as a function of wavelength.

In Figure 2, the transmission spectrum of the association of the arbitrary example of a grey polarizing film and the colored polarizing film is shown for various orientation angles between both films.

Figure 3 shows the transmission spectrum of the CE layer and its polarization efficiency (PE) as a function of wavelength.

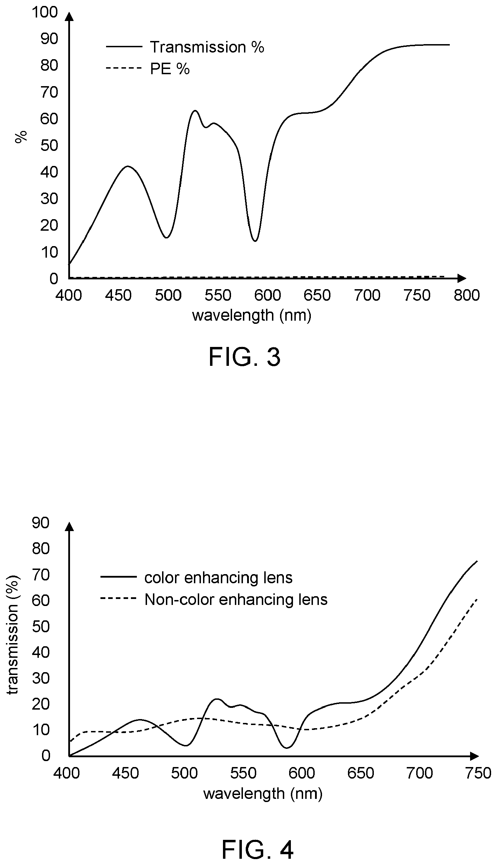

The transmission spectrum of the prototype lens along with that of a standard category 3 green-grey polarizing lens (with no color enhancement) are shown in figure 4.

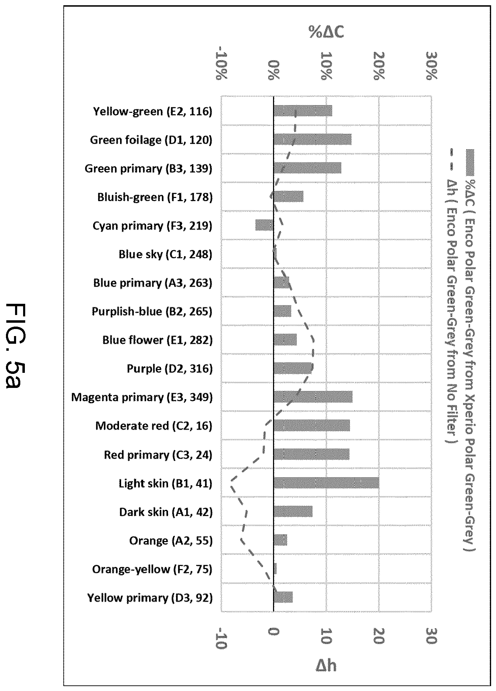

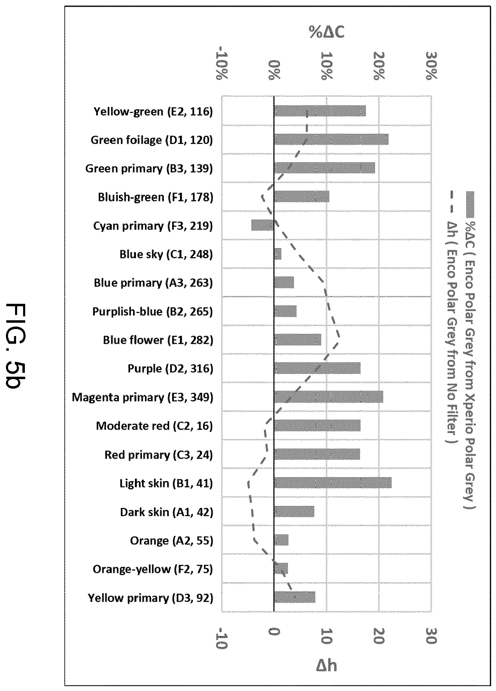

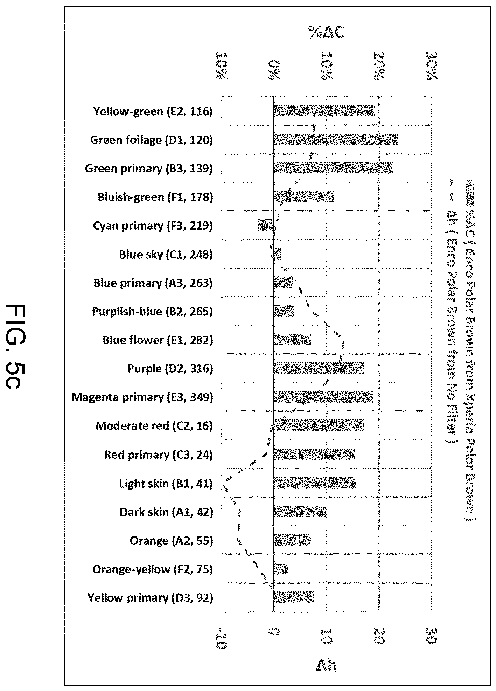

Color enhancement at 20000 lux (delta chroma $\Delta C$) for color-enhancing polarizing lenses with respect to standard colored polarizing lenses is shown in figures 5a-5c. Also shown on figures 5a-5c is the change in hue ($\Delta h$) for the color-enhancing polarizing lenses compared to the hue observed in the absence of any kind of filter.

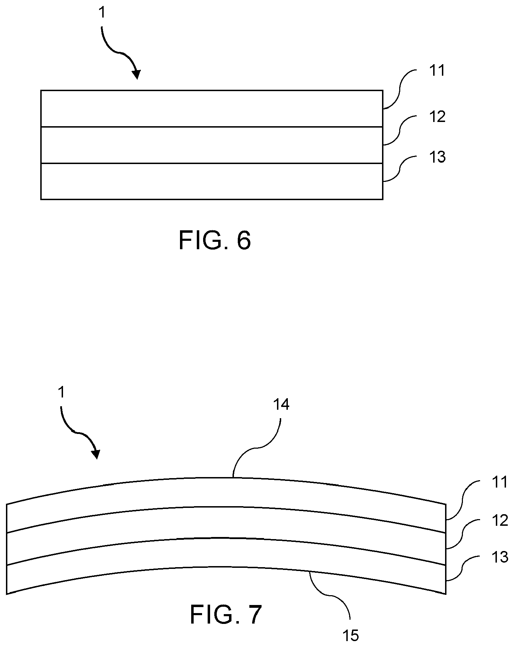

Figure 6 is a schematic cross-section view of the multilayer film of the invention.

Figure 7 is a schematic cross-section view of another embodiment of the multilayer film of the invention with a convex front face and a concave back face.

## Detailed description

An object of the present invention is a color-enhancing polarizing multilayer film 1 comprising:

- a polarizing layer 12 having a front face and a back face;
- a first protective layer 11;
- a second protective layer 13; and
- one or more isotropic dyes comprised in at least one of the first or second protective layers 11;13;

wherein the first protective layer 11 is placed on the front face of the polarizing layer 12 and the second protective layer 13 is placed on the back face of the polarizing layer 12 and wherein the one or more isotropic dyes represent at least 90 wt.%, preferably at least 95 wt.%, still preferably at least 99 wt.%, of the total content of dyes comprised in the first and second protective layers 11;13.

The multilayer film 1 of the invention may be included in an ophthalmic lens to confer polarizing and color-enhancing properties to said lens. For example, the inclusion of the film in an ophthalmic lens can be obtained by injection molding a lens substrate on one side of the multilayer film 1. In some embodiments, the multilayer film 1 of the invention may be used directly as a color-enhancing polarizing ophthalmic lens, for example after a forming it to a spherical shape and edging it to make it suitable for mounting on a spectacle frame.

As defined herein an ophthalmic lens can be a finished lens or a semi-finished lens designed to fit a spectacles frame (in some case after various treatment steps such as surfacing and edging) so as to protect the eye and/or correct or enhance or modify the sight. Said ophthalmic lens can be an uncorrective ophthalmic lens (also called plano or afocal lens) or a corrective ophthalmic lens. A corrective lens may be a unifocal, a bifocal, a trifocal or a progressive lens.

As defined herein, the front face is the face that will be the farther from the eye of the wearer, when the film is included in an ophthalmic lens of a pair of spectacles. The back face is the face that will be the closer to the eye of the wearer, when the film is included in an ophthalmic lens of a pair of spectacles.

The first and second protective layers 11;13 provide protection for the polarizing layer 12, e.g. protection from high temperatures used during injection molding or protection during storage and use.

As defined herein, an isotropic dye is a dye with a dichroic ratio $(A_\parallel / A_\perp)$ below 3, where $A_\parallel$ and $A_\perp$ are respectively the absorbance values of linearly polarized lights with polarization axis parallel and perpendicular to a film stretching axis. In order to measure the absorbance values the dye is dispersed in a polyvinyl alcohol polymer film and oriented by stretching the film (stretch ratio between 1:3 to 1:10 for example). As defined herein, an anisotropic is a dye with a dichroic ratio, as measured by the above method, of above 10.

The multilayer film 1 can comprise one or more layers in addition to the polarizing layer 12 and to the first and second protective layers 11;13.

As defined herein, a layer that is "on" one face is defined as a layer that (a) is positioned over that face, (b) need not be in contact with that face, i.e. one or more intervening layers may be disposed between that face and the layer in question, and (c) need not cover that face completely. However, preferably, a layer that is "on" one face covers that face completely.

The low amount of anisotropic dyes comprised in the first and second protective layer 13 makes it simpler to extrude these layers and laminate the film without it resulting in undesirable effects, such as unexpected color changes or a substantially diminished amount of transmitted light.

In one embodiment, the multilayer film 1 of the invention comprises only one polarizing layer 12.

As defined herein a polarizing layer 12 is a stretched polymeric layer comprising additives enhancing the polarizing functionality of said stretched polymeric layer. Such additives can include dichroic dyes.

Preferably, in the multilayer film 1 of the invention, the one or more isotropic dyes represent at least 90 wt.%, more preferably at least 95 wt.%, even more preferably at least 99 wt.%, of the total content of dyes comprised in layers other than the polarizing layer 12.

Preferably, in the multilayer film 1 of the invention, substantially all the dyes comprised in the first and second protective layers 11;13 are comprised in the first protective layer 11 or substantially all the dyes comprised in comprised in the first and second protective layers 11;13 are comprised in the second protective layer 13.

Preferably, in the multilayer film 1 of the invention, substantially all the dyes comprised in layers other than the polarizing layer 12 are comprised in the first and second protective layers 11;13, more preferably substantially all the dyes comprised in layers other than the polarizing layer 12 are comprised in the first protective layer 11 or substantially all the dyes comprised in layers other than the polarizing layer 12 are comprised in the second protective layer 13.

Preferably, in the multilayer film 1 of the invention, the dyes comprised in the first and second protective layers 11;13 are substantially free of anisotropic dyes.

Preferably, in the multilayer film 1 of the invention, the dyes comprised in layers other than the polarizing layer 12 are substantially free of anisotropic dyes.

Preferably, in the multilayer film 1 of the invention, the one or more isotropic dyes comprised in at least one of the first or second protective layers 11;13 comprise at least one of a broad band isotropic dye and a narrow band isotropic dye.

Preferably, in the multilayer film 1 of the invention, the one or more isotropic dyes comprised in at least one of the first or second protective layers 11;13 comprise at least one narrow band isotropic dye and, optionally at least one broad band isotropic dye.

Preferably, in the multilayer film 1 of the invention, the one or more isotropic dyes comprised in at least one of the first or second protective layers 11;13 comprise 1 to 10 narrow band dyes and 1 to 10 broad band dyes, more preferably 1 to 5 narrow band dyes and 1 to 5 broad band dyes.

As defined herein, a broad band dye is a dye for which the main absorption peak has a full width at half maximum (FWHM) of at least 90 nm.

Throughout the present document, the standard definition of the FWHM is used except for absorption peaks close to the edges of the visible range of wavelengths (close to 380 nm or close to 780 nm), for which the FHWM is defined as two times the half width at half maximum measured on the side of the peak which is in the visible range.

As defined herein, a narrow band dye is a dye for which the main absorption peak has a full width at half maximum of below 80 nm. A narrow band absorption peak is an absorption peak having a full width at half maximum of below 80 nm.

As defined herein, the main absorption peak of a dye is the absorption peak having a maximum value in the visible region (between 380 nm and 780 nm) for which this maximum is the highest among all the absorption peaks of this dye having a maximum value in the visible region. According to this definition, in particular, the derivative of the curve: absorbance = $f(\lambda)$ is 0 at the maximum of an absorption peak.

Preferably, in the multilayer film 1 of the invention, the at least one broad band isotropic dye is chosen from the group consisting of: Solvent Yellow 93, Solvent Orange 60, Solvent Red 52, Solvent Red 111, Solvent Red 169, Solvent Violet 13, Solvent Violet 14, Solvent Violet 31, Solvent Violet 36, Solvent Violet 38, Solvent Violet 50, Solvent Blue 101, Solvent Blue 104, Solvent Blue 138 and Solvent Green 3.

The person skilled in the art can select the broad band dyes in order to balance the color of the multilayer film 1 to obtain the desired color.

Preferably, in the multilayer film 1 of the invention, the at least one narrow band isotropic dye presents, when incorporated in the layer of the multilayer film 1 in which it is comprised, a maximum of a narrow band absorption peak at 400 to 700 nm, more preferably 450 to 640 nm, even more preferably 470 to 615 nm.

In the invention, the narrow band dyes and the specific choice for the wavelength of their absorption peaks are causing the color-enhancing effect.

Color enhancement can be quantified by measuring the chroma (C) and hue (h) using a model developed by the International Commission on Illumination called CIECAM02, see International Commission on Illumination. A Color Appearance Model For Color Management Systems: CIECAM02. CIE 159:2004. CIE Central Bureau, 2004. In particular, the color enhancement of a particular filter is evaluated from the comparison of the Chroma (C) values for 18 specific colors with and without the filter or with two different filters that one may want to compare. A C value for each color is calculated from the equations set forth in the CIECAM02 model after obtaining the product of the color's spectral reflectance with the filter's spectral transmission. The choice of these 18 colors is intended to mimic those of natural objects, for example, human skin, foliage, and flowers; and primary colors such as red, green, blue, yellow, magenta and cyan. The percentage change in C (%$\Delta$C) for each of the 18 colors can be given as:

$$\%\Delta C = \frac{C_{filter} - C_{reference}}{C_{reference}} \times 100$$

Color enhancing filters may also distort the natural hue of colors making an objects color appear to be a different color. Hue (h) is a metric expressed in degrees that numerically describes what color an object is. Hue for each color is also an output that can be calculated from the equations set forth in the CIECAM02 model after obtaining the color's spectral reflectance. Hue for each color with the filter can also be calculated from the product of the color's spectral reflectance with the filter's spectral transmission. Hue for a particular filter is evaluated from the comparison of the hue (h) values for 18 specific colors with and without the filter. The amount of shift in hue ($\Delta$h) for each color is then calculated as the hue without the filter subtracted from the hue with the filter. The shift in hue can either be negative or positive. For this reason, the absolute value of delta hue is used to understand how much shift in color exists.

$$\Delta h = \left| h_{filter} - h_{no\,filter} \right|$$

The maximum delta hue for the 18 colors can then be used to understand how much total shift is possible.

The calculations can be adjusted to simulate outdoor brightness levels. For example, luminance values of 20,000 Lux can be used for sunny environments and 100 Lux for shaded environments. This can be abbreviated as "C20K" and "C100," respectively. The 18 different %$\Delta$C values for each color can then be averaged to calculate an average change called %$\Delta C_{avg}$.

The Macbeth ColorChecker codes for said 18 colors are: (E2,116); (D1,120); (B3,139); (Fl,178); (F3,219); (C1,248); (A3,263); (B2,265); (E1,282); (D2,316); (E3,349); (C2,16); (C3,24); (B1,41); (A1,42); (A2,55); (F2,75); and (D3,92).

Preferably, the multilayer film 1 of the invention, comprises a first narrow band isotropic dye presenting, when incorporated in the layer of the multilayer film 1 in which it is comprised, a maximum of the main absorption peak at 485 to 515 nm, more preferably 490 to 510 nm; and a second narrow band isotropic dye presenting, when incorporated in the layer of the multilayer film 1 in which it is comprised, a maximum of the main absorption peak at 570 to 600 nm, even more preferably 575 to 595 nm.

As demonstrated in the example section of the present document, this specific choice of narrow band dyes confers a particularly desirable color-enhancing effect to the multilayer film 1 of the invention with only little color distortion considering the color-enhancement achieved.

Preferably, the second narrow band isotropic dye is present in the multilayer film 1 in a concentration comprised between 1.2 and 2 times the concentration of the first narrow band isotropic dye.

Preferably, in the multilayer film 1 of the invention, the at least one narrow band isotropic dye presents a FWHM of 15 to 40 nm, more preferably 16 to 38 nm, even more preferably 18 to 36 nm.

In this case, it is understood that where the multilayer film 1 comprises more than one narrow band isotropic dye, each narrow band isotropic dye presents a FWHM as defined above.

Preferably, in the multilayer film 1 of the invention, the at least one narrow band isotropic dye is chosen from the group consisting of: Epolight 5841, Epolight 5819 and Epolight 6698.

Preferably, the first narrow band isotropic dye is Epolight 5841 and the second narrow band isotropic dye is Epolight 5819.

Preferably, in the multilayer film 1 of the invention, the first and second protective layers 11;13 independently comprise, as base material, a thermoplastic polymer selected from a polycarbonate, such as a polycarbonate of bisphenol A, a polyester, such as polyethylene terephthalate, a polyacrylate, such as poly(ethyl methacrylate) or poly(methyl methacrylate), and mixtures thereof, more preferably the first and second protective layers 11;13 comprise the same thermoplastic polymer as base material, even more preferably the first and second protective layers 11;13 comprise a polycarbonate, such as a polycarbonate of bisphenol A, as base material.

According to the present invention the base material of a layer constitutes at least 95 wt.% of said layer.

Preferably, in the multilayer film 1 of the invention, the polarizing layer 12 comprises polyvinyl alcohol as base material.

Preferably, the multilayer film 1 of the invention comprises a front face 14 and a back face 15, wherein the front face 14 is convex and the back face 15 is concave.

Preferably in this case all the layers comprised in the multilayer film 1 of the invention have a convex front face and a concave back face.

The front and back faces 14;15 of the multilayer film 1 and of all the layers comprised therein are defined, mutatis mutandis, as the front and back faces of the polarizing layer 12 are defined above.

Preferably, in the multilayer film 1 of the invention, the first protective layer 11 is a uniaxially stretched layer, for example having a stretch ratio of 1:2 to 1:10.

In some cases, stretching the polymer forming the first protective layer 11 improves the properties of the multilayer film 1 of the invention. This is the case, for example when the polymer used for the first protective layer 11 exhibits birefringence. In this case, when the multilayer film 1 is included in a lens, the light rays pass successively through the birefringent layer and through the polarized layer before reaching the wearer's eyes. Consequently, the wearer will experience unwanted distortions of the image. In these cases, the undesired birefringence effect of the first protective layer 11 can be eliminated by orienting the polymer in the first protective layer 11, e.g. by stretching.

It has been noticed that when a layer is stretched, there is a risk that the dyes contained within this layer become oriented. The inventor have found that when the dyes are anisotropic this can result in unwanted changes in the absorption spectrum of the layer. The use of isotropic dyes helps to avoid this.

According to the invention, the stretch ratio of a layer is defined as the ratio between the starting length and final length of the film, before and after stretching.

Another object of the present invention is an ophthalmic lens, comprising the multilayer film 1 of the invention and a substrate injection-molded onto the multilayer film 1.

Preferably, in the ophthalmic lens of the invention, the substrate is injection-molded directly onto the second protective layer 13. Alternatively, in the ophthalmic lens of the invention, the substrate is injection-molded directly onto the first protective layer 11.

Preferably, the ophthalmic lens of the invention presents a $|\Delta h_{max}|$ value below 15°, more preferably below 10°.

Preferably, the ophthalmic lens of the invention presents a $\%\Delta C_{avg}$ of at least 7%, more preferably of at least 10% as measure according to the model developed by the International Commission on Illumination called CIECAM02 described above.

Another object of the present invention is a method for producing the multilayer film 1 of the invention, comprising the following steps:

- providing the polarized layer;

- extruding a first mixture comprising a first base material to obtain the first protective layer 11;
- extruding a second mixture comprising a second base material to obtain the second protective layer 13; and
- laminating the first protective layer 11, the polarizing layer 12 and the second protective layer 13 into the multilayer film 1;

wherein the one or more isotropic dyes are comprised in at least one of the first or second mixtures; and
wherein the one or more isotropic dyes represent at least 90 wt.%, preferably at least 95 wt.%, still preferably at least 99 wt.%, of the total content of dyes comprised in the first and second mixtures.

Preferably, the method for producing the multilayer film 1 of the invention, further comprises stretching the first protective layer 11, wherein stretching is performed prior to laminating; for example, stretching is performed at a stretch ratio of between 1:2 and 1:10.

Preferably, the method for producing the multilayer film 1 of the invention, further comprises shaping the multilayer film 1, notably by using a cutting press.

Preferably, the method for producing the multilayer film 1 of the invention, further comprises thermoforming the multilayer film 1 to provide the multilayer film 1 with a convex front face 14 and a concave back face 15, wherein thermoforming is carried out after laminating and, where applicable, after shaping.

Another object of the present invention is a method for producing the ophthalmic lens of the invention from the multilayer film 1 of the invention, comprising injection molding a substrate onto the multilayer film 1.

Preferably, in the method for producing the ophthalmic lens of the invention, the substrate is injection molded to the back face 15 of the multilayer film 1.

Examples

Model experiment

This model experiment is designed to demonstrate the loss of transmission that can result from a misalignment of a polarizing layer and of another layer comprising oriented anisotropic dyes.

In this model experiment, an arbitrary example of a grey polarizing layer and a colored polarizing layer comprising oriented dichroic dyes are associated.

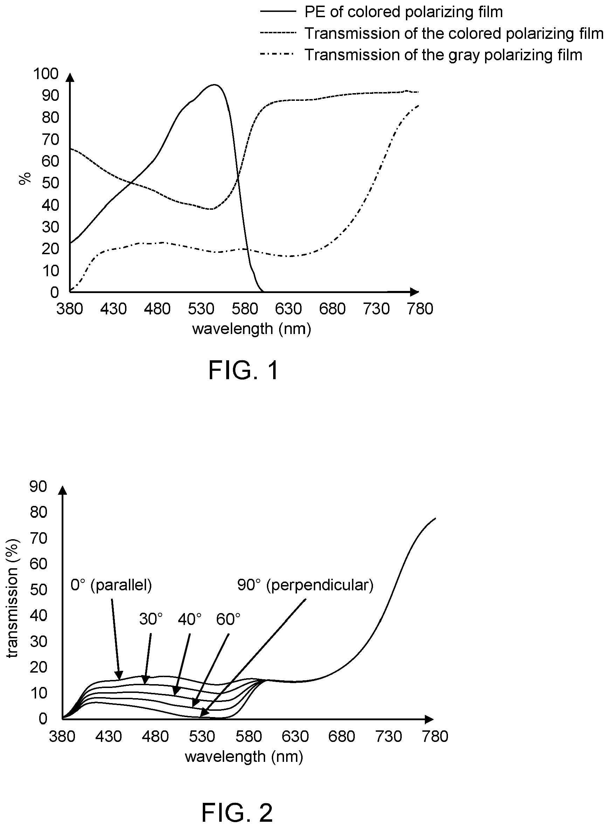

In Figure 1, the transmission spectra of the arbitrary example of a grey polarizing film and of the colored polarizing film are shown along with the polarization efficiency (PE) of the colored polarizing film as a function of wavelength.

In Figure 2, the transmission spectrum of the association of the arbitrary example of a grey polarizing film and the colored polarizing film is shown for various orientation angles between both films. As the orientation of the two films changes from parallel to perpendicular the transmission spectrum changes significantly.

Example according to the invention

Step 1: Extrusion of the color-enhancing (CE) layer

A colored CE layer according to the invention is extruded from a mixture of dyes and of a polycarbonate (PC) resin (Teijin Panlite L-1250VX) to a thickness of 300 $\mu$m.

Table 1 lists the formulation and quantities of the dyes included in the CE layer according to the invention for a green-grey, grey and brown lens. Table 2 lists the characteristics of the absorption peak of said dyes. All the dyes are isotropic. The broad band dyes are chosen to balance the color.

Table 1

| Enco CE layer dye formulation | | | | |
|---|---|---|---|---|
| Dye | | Green -Grey | Grey | Brown |
| Narrow band | Epolight 5841 | 89 ppm | 74 ppm | 89 ppm |
| | Epolight 5819 | 125 ppm | 137 ppm | 142 ppm |

(continued)

| Enco CE layer dye formulation | | | | |
|---|---|---|---|---|
| | Dye | Green -Grey | Grey | Brown |
| Broad band | Solvent Yellow 93 | 313 ppm | 30 ppm | 329 ppm |
| | Solvent Orange 60 | 0 | 85 ppm | 0 |
| | Solvent Red 111 | 0 | 50 ppm | 135 ppm |
| | Solvent Violet 36 | 34 ppm | 60 ppm | 62 ppm |
| | Solvent Green 3 | 140 ppm | 125 ppm | 0 |

Table 2

| Dye absorption characteristics | | | |
|---|---|---|---|
| | Dye | Main peak $\lambda$max | FWHM |
| Narrow band | Epolight 5841 | 498 nm | 34 nm |
| | Epolight 5819 | 585 nm | 20 nm |
| Broad band | Solvent Yellow 93 | 398 nm | *100 nm |
| | Solvent Orange 60 | 456 nm | 102 nm |
| | Solvent Red 111 | 507 nm | 95 nm |
| | Solvent Violet 36 | 561 nm | 120 nm |
| | Solvent Green 3 | 644 nm | 124 nm |
| * The full width at half maximum (FWHM) calculation is only for peaks in the visible region (380 to 780 nm). For Solvent Yellow 93 (SY93), the absorbance max lambda is about 390 nm with a portion of the band less than 380 nm. Therefore, the FWHM was computed with a modified version: FWHM for SY93 = ($\lambda$ at ½ max - 390) x 2 | | | |

Figure 3 shows the transmission spectrum of the grey-green CE layer and its polarization efficiency (PE) as a function of wavelength. It can be noticed that thanks to the use of isotropic dyes, the PE of the CE layer is close to 0 over the whole range of wavelengths.

Step 2: formation of the multilayer film 1 according to the invention (PC/PVA/CE laminate)

Stretched clear PC layer 11 (Ophthalmic grade PC from Teijin), a Category 2 grey polarizing layer 12 from Onbitt made of polyvinyl alcohol (PVA), and the CE layer 13 were laminated using PVA glue.

Step 3: formation of a lens comprising the PC/PVA/CE laminate

A substrate made of polycarbonate (Ophthalmic grade PC from Teijin) was injection molded on the grey-green CE layer of the PC/PVA/CE laminate to obtain a prototype lens of category 3.
The transmission spectrum of the prototype grey-green lens along with that of a standard category 3 grey-green polarizing lens (Xperio grey-green polarizing lens by Essilor with no color enhancement) are shown in figure 4.
Color enhancement at 20000 lux (delta chroma $\Delta$C) for color-enhancing polarizing lenses with respect to standard polarizing lenses (Xperio polarizing lens by Essilor) is included in figures 5a-5c, for grey, brown and grey-green lenses. Also shown on figures 5a-5c is the change in hue ($\Delta$h) for the color-enhancing polarizing lenses compared to the hue observed in the absence of any kind of filter.
The $\Delta$C is measured for 18 specific colors whose Macbeth ColorChecker codes are given on the figure.
The color-enhancing polarizing lenses achieve excellent %$\Delta C_{avg}$ of 10.9% for the grey lens, of 11.2% for the brown lens, and of 7.7% for the grey-green lens over the standard comparative lenses. Moreover, these values for the color-enhancement are achieved while causing only minimal color distortion. Indeed, for the grey lens, $|\Delta h_{max}|$ is only 12.6°, for the brown lens, $|\Delta h_{max}|$ is only 13.4°, and for the grey-green lens, $|\Delta h_{max}|$ is only 8.6°.

**Claims**

1. A color-enhancing polarizing multilayer film (1) comprising:

   - a polarizing layer (12) having a front face and a back face;
   - a first protective layer (11);
   - a second protective layer (13); and
   - one or more isotropic dyes comprised in at least one of the first or second protective layers; wherein the first protective layer is placed on the front face of the polarizing layer and the second protective layer is placed on the back face of the polarizing layer and

   wherein the one or more isotropic dyes represent at least 90 wt.% of the total content of dyes comprised in the first and second protective layers.

2. The multilayer film of claim 1, wherein the one or more isotropic dyes represent at least 90 wt.% of the total content of dyes comprised in layers other than the polarizing layer.

3. The multilayer film of claim 1 or 2, wherein substantially all the dyes comprised in the first and second protective layers are comprised in the first protective layer or substantially all the dyes comprised in comprised in the first and second protective layers are comprised in the second protective layer.

4. The multilayer film of claims 1 to 3, wherein the dyes comprised in the first and second protective layers are substantially free of anisotropic dyes.

5. The multilayer film of claims 1 to 4, wherein the one or more isotropic dyes comprised in at least one of the first or second protective layers comprise at least one narrow band isotropic dye and optionally at least one broad band isotropic dye.

6. The multilayer film of claim 5, wherein the at least one broad band isotropic dye is chosen from the group consisting of: Solvent Yellow 93, Solvent Orange 60, Solvent Red 52, Solvent Red 111, Solvent Red 169, Solvent Violet 13, Solvent violet 14, Solvent Violet 31, Solvent Violet 36, Solvent Violet 38, Solvent Violet 50, Solvent Blue 101, Solvent Blue 104, Solvent Blue 138 and Solvent Green 3.

7. The multilayer film of claim 5 or 6, wherein the at least one narrow band isotropic dye presents, in the layer of the multilayer film in which it is comprised, a maximum of a narrow band absorption peak at 400 to 700 nm.

8. The multilayer film of any one of claims 5 to 7, wherein the at least one narrow band isotropic dye is chosen from the group consisting of: Epolight 5841, Epolight 5819 and Epolight 6698.

9. The multilayer film of any one of claims 1 to 8, wherein the first and second protective layers independently comprise, as base material, a thermoplastic polymer selected from a polycarbonate, a polyester, a polyacrylate, and mixtures thereof.

10. The multilayer film of any one of claims 1 to 9, wherein the polarizing layer comprises polyvinyl alcohol as base material.

11. The multilayer film of any one of claims 1 to 10, wherein the first protective layer is a uniaxially stretched layer.

12. An ophthalmic lens, comprising the multilayer film of any one of claims 1 to 11 and a substrate injection-molded onto the multilayer film.

13. A method for producing the multilayer film of any one of claims 1 to 11, comprising the following steps:

    - providing the polarized layer;
    - extruding a first mixture comprising a first base material to obtain the first protective layer;
    - extruding a second mixture comprising a second base material to obtain the second protective layer; and
    - laminating the first protective layer, the polarizing layer and the second protective layer into the multilayer film;

wherein the one or more isotropic dyes are comprised in at least one of the first or second mixtures; and
wherein the one or more isotropic dyes represent at least 90 wt.%, preferably at least 95 wt.%, still preferably at least 99 wt.%, of the total content of dyes comprised in the first and second mixtures.

14. The method of claim 13, further comprising stretching the first protective layer, wherein stretching is performed prior to laminating.

15. A method for producing the ophthalmic lens of any one of claim 12 from the multilayer film of any one of claims 1 to 11, comprising injection molding a substrate onto the multilayer film.

FIG. 1

FIG. 2

FIG. 3

FIG. 4

FIG. 5a

FIG. 5b

%ΔC

-10%  0%  10%  20%  30%

Yellow-green (E2, 116)
Green foilage (D1, 120)
Green primary (B3, 139)
Bluish-green (F1, 178)
Cyan primary (F3, 219)
Blue sky (C1, 248)
Blue primary (A3, 263)
Purplish-blue (B2, 265)
Blue flower (E1, 282)
Purple (D2, 316)
Magenta primary (E3, 349)
Moderate red (C2, 16)
Red primary (C3, 24)
Light skin (B1, 41)
Dark skin (A1, 42)
Orange (A2, 55)
Orange-yellow (F2, 75)
Yellow primary (D3, 92)

▨ %ΔC ( Enco Polar Brown from Xperio Polar Brown )

– – Δh ( Enco Polar Brown from No Filter )

-10  0  10  20  30

Δh

FIG. 5c

FIG. 6

FIG. 7

Europäisches Patentamt

European Patent Office

Office européen des brevets

# EUROPEAN SEARCH REPORT

Application Number

EP 22 30 5929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/179538 A1 (OAKLEY INC [US]) 26 November 2015 (2015-11-26) | 1,2,5,6, 9-15 | INV. G02B5/223 |
| Y | * paragraphs [0022;0120], [0087], [0007], [0121], [0116], [0090], [0093]; figures 1B, 9, 5 * <br> * paragraph [0136] – paragraph [0137] * <br> * page 28, line 21 – line 22 * | 6,8 | |
| X | US 2006/039070 A1 (SUGIMURA HIDEYO [US] ET AL) 23 February 2006 (2006-02-23) | 1 | |
| Y | * paragraphs [0034], [0027] * | 6,8 | |
| X | WO 97/38345 A1 (POLAROID CORP [US]) 16 October 1997 (1997-10-16) <br> * page 10, line 19 – line 23 * <br> * page 12, line 20 – line 24; figure 1 * <br> * page 20, line 21 – line 24 * | 1,3,4 | |

TECHNICAL FIELDS SEARCHED (IPC)

G02B

The present search report has been drawn up for all claims

| Place of search | Date of completion of the search | Examiner |
|---|---|---|
| Munich | 16 November 2022 | Jones, Julian |

EPO FORM 1503 03.82 (P04C01)

## ANNEX TO THE EUROPEAN SEARCH REPORT
## ON EUROPEAN PATENT APPLICATION NO.

EP 22 30 5929

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2022

| Patent document cited in search report | | | Publication date | Patent family member(s) | | | Publication date |
|---|---|---|---|---|---|---|---|
| WO | 2015179538 | A1 | 26-11-2015 | NONE | | | |
| US | 2006039070 | A1 | 23-02-2006 | US | 2006039070 | A1 | 23-02-2006 |
| | | | | US | 2008144176 | A1 | 19-06-2008 |
| WO | 9738345 | A1 | 16-10-1997 | AU | 2435197 | A | 29-10-1997 |
| | | | | US | 5751481 | A | 12-05-1998 |
| | | | | WO | 9738345 | A1 | 16-10-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9575335 B1
- US 6145984 A
- US 20170139234 A
- US 2298058 A
- WO 2016125694 A1

**Non-patent literature cited in the description**

- International Commission on Illumination. A Color Appearance Model For Color Management Systems: CIECAM02. CIE Central Bureau, 2004